# EUROPÄISCHE PATENTSCHRIFT

(11) **EP 0 803 323 B1**
(45) Veröffentlichungstag und Bekanntmachung des Hinweises auf die Patenterteilung: **15.11.2000**
(21) Anmeldenummer: 97106038.9
(22) Anmeldetag: 12.04.1997
(51) Int. Cl.: B23Q 17/20, G01B 5/10

(54) **Verfahren und Vorrichtung zum Messem des Durchmessers exzentrisch umlaufender Werkstücke**
Method and apparatus for measuring the diameter of excentrically rotating workpieces
Procédé et dispositif pour mesurer le diamètre d'un objet tournant excentriquement

(30) Priorität: 24.04.1996 DE 19616353
(43) Veröffentlichungstag der Anmeldung: 29.10.1997
(73) Patentinhaber: Schaudt Maschinenbau GmbH, 70329 Stuttgart (DE)
(72) Erfinder: Brill, Jürgen, 70619 Stuttgsrt (DE)
(74) Vertreter: Herrmann, Günther

(56) Entgegenhaltungen:
- DE-A- 3 521 710
- DE-A- 4 412 682

## Beschreibung

Die Erfindung betrifft ein Verfahren und eine Vorrichtung zum Messen des Durchmessers eines exzentrisch um eine Umlaufachse umlaufenden Werkstücks, beispielsweise eines Hubzapfens einer auf einer Werkzeugmaschine, insbesondere einer Schleifmaschine, rotierenden Kurbelwelle während der Bearbeitung gemäß dem Oberbegriff des Anspruchs 1 bzw. des Anspruchs 7.

Durch die DE 35 21 710 C2 (= US 4 637 144) sind ein Verfahren und eine Vorrichtung dieser Art für die Inprozessmessung des Durchmessers von Hubzapfen einer Kurbelwelle bekannt. Diese bekannte Vorrichtung weist einen an einem Arm einer Schwinge in Längsrichtung verfahrbaren Meßkopf mit Tastern zum Abgreifen des Werkstückdurchmessers auf. Der an die Umfangsfläche eines Hubzapfens angelegte und mit einer bestimmten Kraft angedrückte Meßkopf folgt wegen seiner schwenkbaren und längs verfahrbaren Anordnung dem vollen Umlauf des Hubzapfens, wobei mit den Tastern permanent der Durchmesser des Werkstücks abgegriffen wird und die entsprechenden Durchmessermeßwerte für die Steuerung der Werkstückbearbeitung gebildet werden. Auf diese Weise steht zwar immer ein aktueller Durchmessermeßwert zur Verfügung, der aber mit relativ hohem apparativem Aufwand erkauft werden muß.

Der Erfindung liegt die Aufgabe zugrunde, ein weiteres Verfahren und eine weitere Vorrichtung der eingangs angegebenen Art anzugeben.

Gelöst wird diese Aufgabe bei einem Verfahren der eingangs angegebenen Art erfindungsgemäß dadurch, daß die Meßtaster des Meßkopfes nur in einem vorgegebenen Umlaufbahnabschnitt an das umlaufende Werkstück angelegt werden und daß der Werkstückdurchmesser beim Durchlaufen dieses vorgegebenen Umlaufbahnabschnitts erfaßt wird. Gemäß einer Weiterentwicklung des Verfahrens nach der Erfindung wird der Werkstückdurchmesser während eines jeden Werkstückumlaufs jeweils nur einmal beim Durchlaufen des vorgegebenen Umlaufbahnabschnitts erfaßt. Der Erfindung liegt die Erkenntnis zugrunde, daß es genügt, den Werkstückdurchmesser während eines Werkstückumlaufs nur einmal oder nur in einem vorgegebenen Umlaufbahnabschnitt zu erfassen. Das kann mit einer gegenüber dem Stand der Technik stark vereinfachten Meßkopfanordnung ausgeführt werden, so daß technischer Aufwand und Kosten erheblich reduziert werden. Die Präzision der Werkstückbearbeitung leidet darunter nicht, weil bei den meistens modernen Steuerungen der Solldurchmesser ohnehin nur einmal pro Werkstückumdrehung vorgegeben wird und für den Abgleich die einmalige Erfassung des Istdurchmessers also ausreicht.

Fortführungen, Weiterbildungen und vorteilhafte Ausgestaltungen des Verfahrens nach der Erfindung sind in den Unteransprüchen 3 bis 6 enthalten. Dabei gibt der Anspruch 3 in Fortführung der Erfindung Merkmale von Einzelheiten des Meßverfahrens an. Die gemäß Anspruch 4 vorgesehene angetriebene und gesteuerte Schwenkung des Meßkopfes verhindert Belastungen der Meßtaster durch das bewegte Werkstück, was der Zuverlässigkeit der Messung zugute kommt. Die Schwenkbewegung des Meßkopfes wird dazu in synchroner Übereinstimmung mit der Werkstückbewegung angetrieben und gesteuert. Anspruch 5 zeigt eine besonders einfache Verfahrensgestaltung, die höchstens geringen mechanischen Aufwand für die Mitführbewegung des Meßkopfes erfordert und einen eigenen Antrieb mit numerischer Steuerung nicht benötigt. Die Merkmale des Anspruchs 6 definieren die derzeit für die Messung bevorzugte Relativstellung von Meßkopf und Werkstück. Gemäß Anspruch 6 wird für das Abgreifen des Werkstückdurchmessers der Abschnitt der Bewegungsbahn des Werkstücks gewählt, in dem die lineare Relativbewegung zwischen den Tastern am kleinsten ist. Dadurch sind optimale Meßergebnisse zu erwarten.

Für eine Vorrichtung der eingangs angegebenen Art wird die der Erfindung zugrundeliegende Aufgabe mit den kennzeichnenden Merkmalen des Anspruchs 7 gelöst. Fortführungen, Weiterbildungen und vorteilhafte Ausgestaltungen der Vorrichtung nach der Erfindung sind in den Unteransprüchen 8 bis 14 angegeben. Die Ansprüche 8 und 9-betreffen den Antrieb und die Steuerung der Schwenkbewegung des Meßkopfes, die die störungsfreie Durchmessererfassung gewährleisten. Die Ausbildung der Vorrichtung nach dem Anspruch 10 zeichnet sich durch besondere Einfachheit aus, die dennoch zu einwandfreien Meßergebnissen führt. Anspruch 11 enthält eine Meßkopfvariante, die in vorteilhafter Weise für den Fall der durch das Werkstück selbst angetriebenen Schwenkbewegung des Meßkopfes geeignet ist. Dasselbe gilt für die in den Ansprüchen 12 und 13 angegebenen Vorrichtungsvarianten. Die Merkmale des Anspruchs 14 ermöglichen die schnelle und automatische Vorbereitung des Meßkopfes für den nächsten Meßvorgang.

Die Erfindung bietet den Vorteil, daß für die Messung des Durchmessers eines exzentrisch um eine Umlaufbahn umlaufenden Werkstückes nur relativ wenig mechanischer Aufwand erforderlich ist. Die Vorrichtung begnügt sich mit einem im wesentlichen herkömmlichen Meßkopf mit Meßtastern, der um eine ortsfeste Achse lediglich in einem kurzen Bogen schwenkbar angeordnet ist. Eine Linearführung des Meßkopfes entsprechend dem Hub der exzentrisch umlaufenden Werkstücke sowie am Werkstück anliegende Führungsprismen sind nicht erforderlich. Da die Meßtaster nicht in dauerndem Kontakt mit dem umlaufenden Werkstück sind, ist deren Verschleiß reduziert, ohne daß die Messung und die die Meßwerte verwertende Maschinensteuerung beeinträchtigt sind. So führt das erfindungsgemäß vorgeschlagene intermittierende Abgreifen des Werkstückdurchmessers zu einer Verlängerung der Standzeit der Einrichtung ohne Verlust an Präzision. Die Erfindung ist einsetzbar bei Schleifprozessen mit kontinuierlicher Zustellung und erweist sich als besonders vorteilhaft in Verbindung mit einem Zustellverfahren, bei dem die Zustellung schrittweise vorzugsweise einmal pro Werkstückumdrehung jeweils in bestimmten Winkellagen des Werkstücks erfolgt.

Die Erfindung wird nun anhand der Zeichnung näher erläutert. Es zeigen
- Figur 1: eine Draufsicht auf den Maschinentisch einer Kurbelwellenschleifmaschine mit einer Meßvorrichtung nach der Erfindung etwa in Pfeilrichtung A der Figur 3 in schematischer Darstellung,
- Figuren 2: eine Seitenansicht der Meßvorrichtung etwa entlang der Linie B-B in Figur 1 in nicht maßstabsgerechter schematischer Darstellung,
- Figuren 3 und 4: die Seitenansicht der Figur 2 in verschiedenen Arbeitspositionen und
- Figuren 5 bis 9: eine der Figur 2 entsprechende Seitenansicht einer gesteuerten Variante der Meßvorrichtung in einer vereinfachten schematischen Darstellung

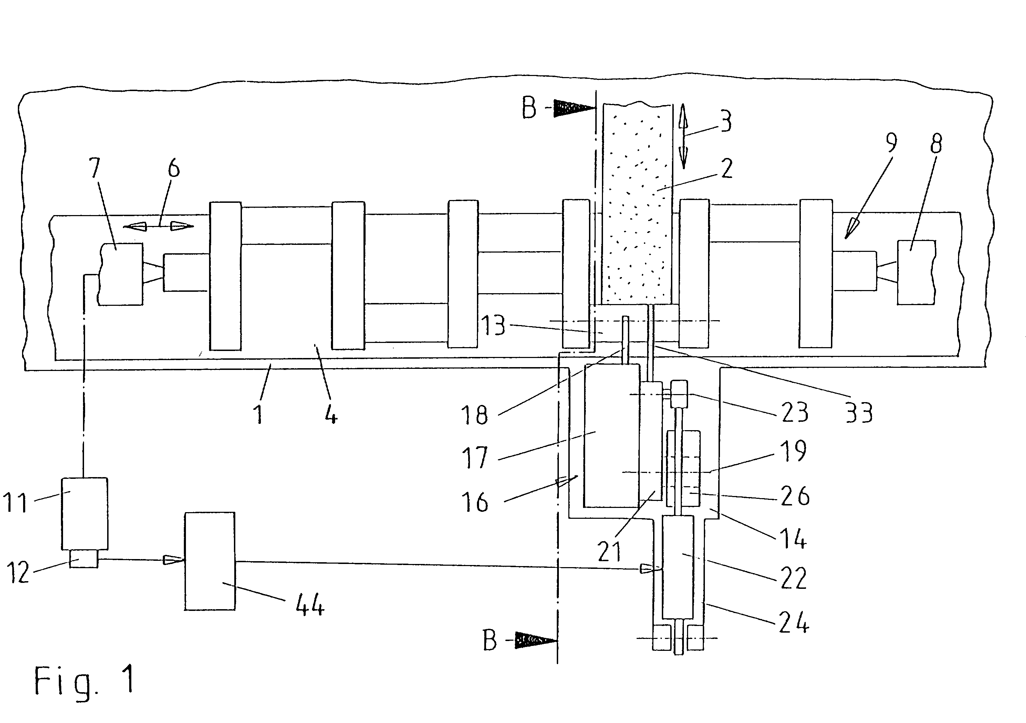

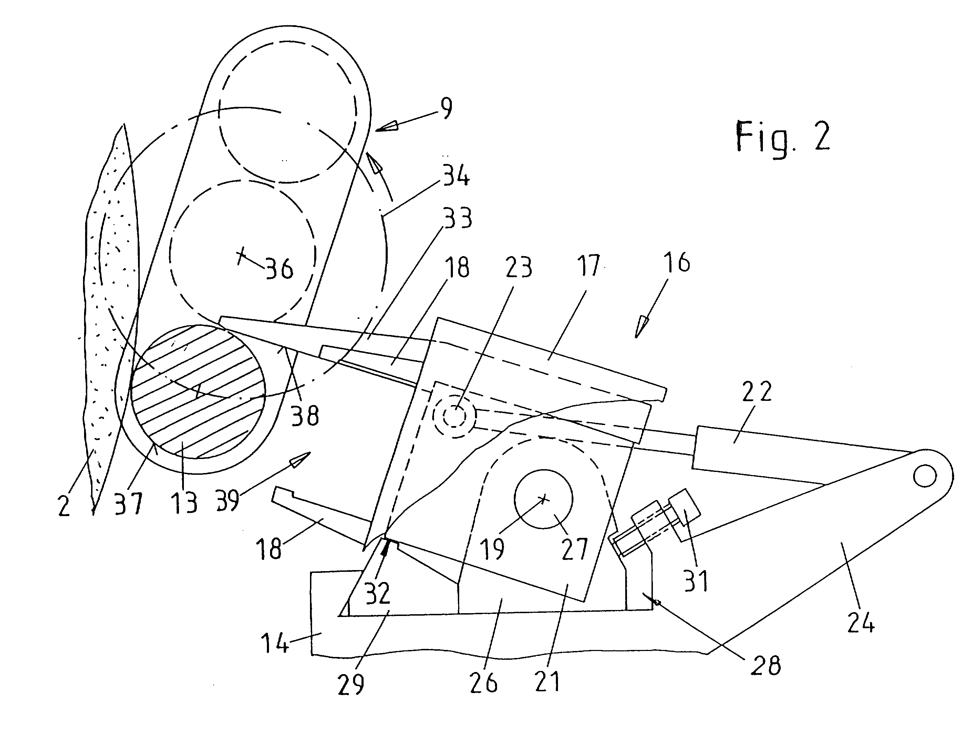

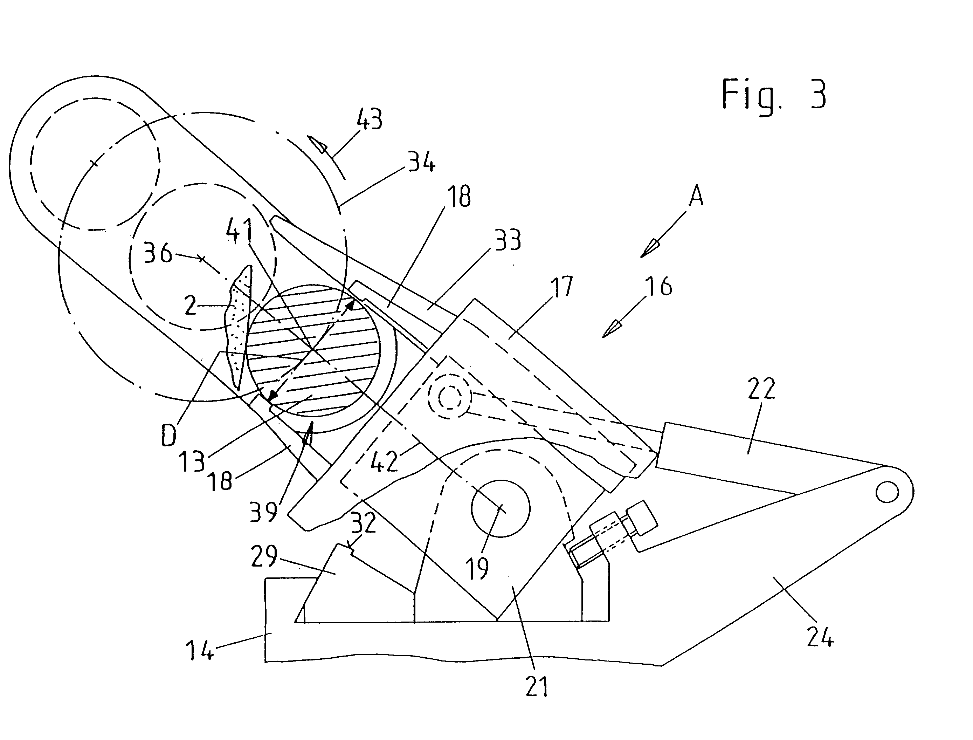

Figur 1 zeigt in schematischer Darstellung eine Draufsicht auf den Werkstücktisch einer Kurbelwellenschleifmaschine mit einer Meßvorrichtung gemäß der Erfindung etwa in der durch den Pfeil A in Figur 3 angegebenen Blickrichtung. Figur 2 zeigt eine schematische Ansicht der Vorrichtung nach der Erfindung entlang der Linie B-B der Figur 1. Gleiche Teile sind in den Figuren mit denselben Bezugszeichen versehen.

Mit 1 ist das Maschinenbett einer Kurbelwellenschleifmaschine bezeichnet, auf welcher ein nicht dargestellter Schleifspindelstock mit einer Schleifscheibe 2 in Pfeilrichtung 3 verfahrbar ist. Quer zur Schleifscheibe 2 ist auf dem Maschinenbett 1 ein Werkstücktisch oder Werkstückschlitten 4 in Pfeilrichtung 6 verfahrbar geführt. Der Werkstückschlitten 4 trägt einen Werkstückspindelstock 7 und einen Reitstock 8 mit Zentrierspitzen, zwischen denen in üblicher Weise eine Kurbelwelle 9 eingespannt ist. Die Werkstückspindel wird von einem Motor 11 angetrieben, der mit einem Winkelgeber 12 zur Erfassung der Drehwinkellage der Kurbelwelle 9 verbunden ist. In der Darstellung der Figur 1 ist der Werkstückschlitten 4 in Pfeilrichtung 6 so positioniert, daß sich ein Kurbelzapfen 13 als Werkstück vor der Schleifscheibe 2 in Bearbeitungsposition befindet.

Auf einer Konsole 14 des Maschinenbettes 1 ist eine Meßvorrichtung 16 zur Erfassung des Durchmessers des Kurbelzapfens 13 während seiner Bearbeitung durch die Schleifscheibe 2 angeordnet.

Diese Meßvorrichtung 16 weist einen Meßkopf 17 mit Meßtastern 18 auf. Der Meßkopf 17 ist an einem um eine Schwenkachse 19 schwenkbaren Meßkopfträger 21 angebracht. Ein Schwenkantrieb 22, beispielsweise in Gestalt einer Kolben-Zylinder-Einheit, greift an einer Achse 23 an den Meßkopfträger 21 an. Der Schwenkantrieb 22 ist an einem Ausleger 24 der Konsole 14 angelenkt. Ein Lagerblock 26 trägt das Schwenklager 27 des Meßkopfträgers 21. Der Lagerblock 26 ist auf der Konsole in einer Aufnahme 28 mittels eines Positionierelements 29 in einer korrekten Lage zum umlaufenden Kurbelzapfen 13 positioniert und mittels Spannmitteln, beispielsweise Spannschrauben 31, verspannt. Das Positionierelement 29 weist eine Anschlagfläche 32 für die extreme untere Schwenkposition des Meßkopfträgers 21 auf. Durch Austauschen des Positionierelementes 29 können die Position des Lagerblocks 26 und die Lage der Anschlagfläche 32 und damit die extreme untere Schwenkposition des Meßkopfträgers 21 auf verschiedene Kurbelwellengrößen umgerüstet werden.

Der Meßkopfträger 21 ist mit einem starren Führungslineal 33 versehen, das in die Umlaufbahn 34 des Werkstücks 13 um eine Umlaufachse 36, im gegebenen Beispielsfall die Kurbelwellenachse, eingreift. Dabei erstreckt sich das Führungslineal 33 über die Länge der Taste 18 hinaus tangential zur Umfangsfläche 37 des Kurbelzapfens 13 in dessen Bewegungsbahn hinein.

Die Funktionsweise der beschriebenen Vorrichtung ist wie folgt:

Zur Vorbereitung der nächsten Messung wird der Meßkopf 17 durch Schwenken des Meßkopfträgers 21 mittels des Antriebes 22 in seine in Figur 2 gezeigte extreme untere Position geschwenkt, in welcher der Meßkopfträger auf der Anschlagfläche 32 des Positionierelements 29 aufliegt. In dieser Position ist der Meßkopf 17 so zur Bewegungsbahn 34 des Hubzapfens 13 ausgerichtet, daß sich die Umfangsfläche 37 des Hubzapfens bei der Berührung mit der Spitze des Führungslineals 33 tangential gleitend an eine Führungsfläche 38 des Führungslineals anlegt. Bei der weiteren Bewegung des Hubzapfens 13 entlang seiner Bewegungsbahn 34 gleitet seine Umfangsfläche 37 an der Führungsfläche 38 entlang und schwenkt dabei den Meßkopf im Uhrzeigersinn um die Schwenkachse 19. Der Antrieb 22 ist dabei ausgeschaltet, so daß er der Schwenkbewegung des Meßkopfes 17 keinen Widerstand entgegensetzt. Bei der weiteren Bewegung des Hubzapfens 13 entlang seiner Bewegungsbahn 34 gleitet die Umfangsfläche 37 an der Führungsfläche 38 entlang, und der Hubzapfen gelangt in den zwischen den Tastern 18 liegenden Erfassungsbereich 39, was in Figur 3 dargestellt ist, in der wieder gleiche Teile mit denselben Bezugszeichen versehen sind wie in den Figuren 1 und 2.

In Figur 3 hat der Hubzapfen 13 die Meßposition im Erfassungsbereich 39 zwischen den Meßtastern 18 erreicht, in welcher beide Taster den Durchmesser D des Werkstückes abgreifen und der Meßkopf 17 ein Durchmessersignal erzeugt. Die Messung erfolgt also gerade beim Durchgang der Werkstückachse 41 durch die die Schwenkachse 19 des Meßkopfes 17 und die Umlaufachse 36 des Werkstückes verbindende Ebene 42, die in Figur 3 strichpunktiert eingezeichnet ist. In dieser Phase hat die Relativbewegung zwischen den Tastflächen der Taster 18 und der Umfangsfläche des Werkstückes in Längsrichtung der Taster ihr Minimum, so daß hier ein weitgehend störungsfreies Abgreifen des Durchmessers D optimal gewährleistet ist.

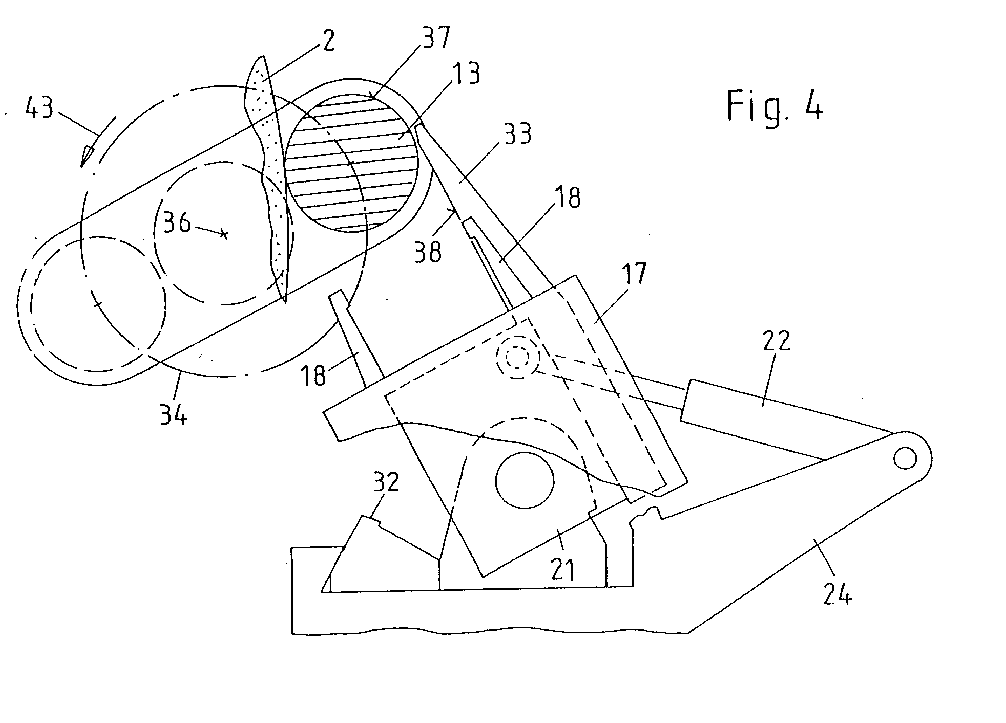

Die weitere Bewegung des Hubzapfens 13 entlang seiner Bewegungsbahn 34 in Pfeilrichtung 43 schwenkt den Meßkopf 17 weiter im Uhrzeigersinn, bis die Führungsfläche 38 des Führungslineals 33 in der in Figur 4 dargestellten Austrittsposition tangential zur Umfangsfläche 37 des Hubzapfens 13 verläuft. In dieser Stellung, (in Figur 4 sind gleiche Teile wieder mit denselben Bezugszeichen wie in den Figuren 1 bis 3 bezeichnet) löst sich der Hubzapfen 13 von der Führungsfläche 38 des Führungslineals 33 gleitend und stoßfrei. Dadurch werden die Messung mölicherweise verfälschende Schwingungen im Meßkopf vermieden.

Nachdem das Werkstück 13 den Bereich des Führungslineals 33 verlassen hat, gibt der Winkelgeber 12 (s.Fig.1) des Kurbelwellenantriebs 11 in einer vorbestimmten Winkellage der Kurbelwelle ein Signal an eine Steueranordnung 44 ab, die den Schwenkantrieb 22 in Gang setzt, der daraufhin den Meßkopfträger 21 mit dem Meßkopf 17 entgegen dem Uhrzeigersinn gegen die Anschlagfläche 32 bewegt, um den Meßkopf in die in Figur 2 dargestellte, für die nächste Durchmessermessung geeignete Position zu bringen.

Für den Fall, daß nach der Messung keine weitere Messung des Durchmessers erforderlich ist, wird der Meßkopf 17 durch den Schwenkantrieb 22 ausgehend von der in der Figur 4 dargestellten Position weiter im Uhrzeigersinn geschwenkt, bis seine Taster ganz aus dem Bewegungsbereich des umlaufenden Hubzapfens 13 herausbewegt sind. Diese Position ist nicht dargestellt.

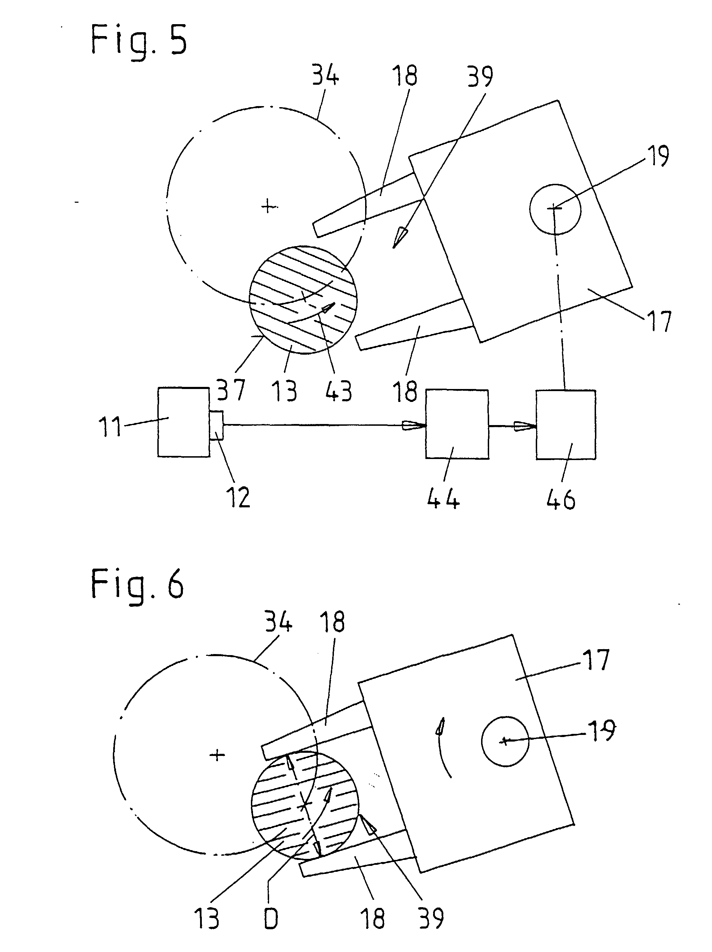

Die Figuren 5 bis 9 zeigen eine Variante der Durchmessererfassung eines exzentrisch umlaufenden Werkstückes mit einem Meßkopf, dessen Schwenkbewegung numerisch gesteuert ist.

Das Werkstück, beispielsweise wieder ein Kurbelzapfen 13 einer im übrigen nicht weiterdargestellten Kurbelwelle, läuft wie im Fall der Figuren 1 bis 4 entlang der Bewegungsbahn 34 in Pfeilrichtung 43 um. Diese Umlaufbewegung wird wie im Falle der Figur 1 durch den Kurbelwellenantrieb 11 angetrieben, dessen Winkellage mit dem Drehwinkelgeber 12 erfaßt wird. Der Drehwinkelgeber 12 erzeugt der Drehwinkelposition der Kurbelwelle entsprechende Winkelsignale, die er an die Steueranordnung 44, beispielsweise die Maschinensteuerung, abgibt.

Der Meßkopf ist bei dieser Variante ebenso ausgebildet wie der im Zusammenhang mit den Figuren 1 bis 4 dargestellte und ist ebenfalls mit der Bezugszahl 17 bezeichnet. Der Aufbau der Meßkopfanordnung ist in den Figuren 5 bis 9 nicht noch einmal dargestellt. Er kann ebenso gestaltet sein wie in den Figuren 1 bis 4 gezeigt, wobei der Schwenkantrieb 22 sowie die Anschlagfläche 32 entfallen. Stattdessen ist die Schwenkbewegung des Meßkopfes 17 von einem Motor 46 angetrieben, der von der Steueranordnung 44 in Abhängigkeit von der Winkellage des Werkstücks 13 auf seiner Bewegungsbahn 34 gesteuert wird. Die verschiedenen Positionen, die der Meßkopf 17 während der Erfassung eines Werkstückdurchmessers einnimmt, sind in den Figuren 5 bis 8 dargestellt.

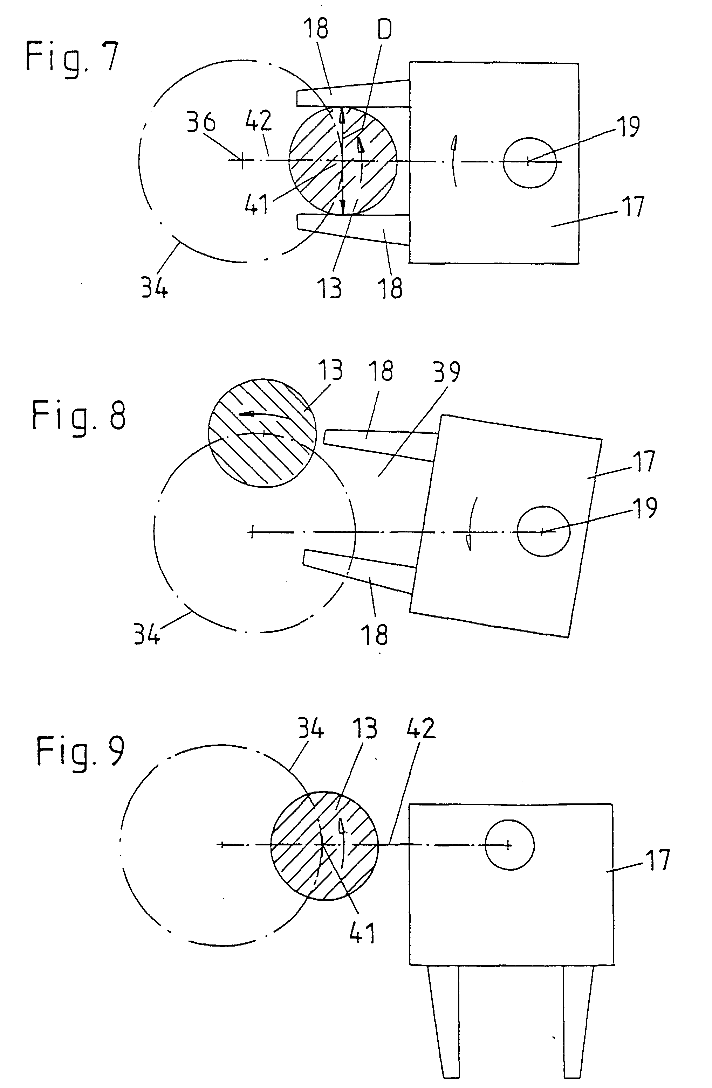

Gemäß der Figur 5 ist der Meßkopf 17 in eine Eintrittsposition geschwenkt, in welcher die Taster 18 tangential zur Umfangsfläche 37 des ankommenden Hubzapfens 13 ausgerichtet sind und in die Bewegungsbahn 34 des Hubzapfens eingreifen. Gemäß Figur 6 hat sich der Hubzapfen 13 in den Erfassungsbereich 39 zwischen den Tastern 18 des Meßkopfes 17 bewegt, wobei die Berührung zwischen den Tastern und der Umfangsfläche des Werkstücks beim Eintritt in den Erfassungsbereich wegen der tangentialen Ausrichtung der Taster weitgehend stoßfrei und gleitend erfolgt. Während sich jetzt der Hubzapfen 13 weiter entlang seiner Bewegungsbahn 34 bewegt wird gleichzeitig der Meßkopf 17 durch den Antrieb 46 in Abhängigkeit von der Winkellage des Werkstückes 13 um seine Achse 19 im Uhrzeigersinn geschwenkt, so daß zwischen beiden Tastern 18 und dem Werkstück immer eine belastungsfreie Berührung stattfindet. Figur 7 zeigt die Meßposition des Meßkopfes 17, die dadurch definiert ist, daß die Werkstückachse 41 die die Schwenkachse 19 des Meßkopfes und die Umlaufachse 36 des Werkstückes verbindende Ebene 42 passiert. Auch hier wird die Durchmessererfassung wieder durchgeführt in einer Werkstückposition, in welcher die Längsbewegung des Werkstückes an den Tastern 18 entlang sehr klein ist. Das erhöht die Zuverlässigkeit der Durchmessermessung.

Gemäß Figur 8 hat das Werkstück 13 bei seinem Umlauf entlang seiner Bewegungsbahn 34 den Erfassungsbereich 39 der Taster 18 verlassen und vollendet seinen Umlauf, während es gleichzeitig, was in den Figuren 5 bis 9 nicht dargestellt ist, weiter in Kontakt mit der Schleifscheibe ist und geschliffen wird. Der Meßkopf 17 wird inzwischen entgegen dem Uhrzeigersinn um seine Schwenkachse 19 herum in die Eintrittsposition der Figur 5 zurückgeschwenkt, um für die nächste Durchmessermessung im nächsten Umlauf des Werkstückes bereitzustehen. Diese Rückbewegung des Meßkopfes ist durch die Steueranordnung 44 in Abhängigkeit von der Winkelposition des Werkstückes auf seiner Bewegungsbahn gesteuert, um Kollisionen zwischen dem Werkstück und den Tastern während dieser Rückbewegung zu vermeiden.

Figur 9 zeigt eine inaktive Position des Meßkopfes 17, in welcher eine Erfassung des Durchmessers des Werkstückes 13 beim Durchgang von dessen Achse durch die Verbindungsebene 42 nicht erfolgt.

Mit den beschriebenen Vorrichtungsvarianten wird also der Durchmesser D eines exzentrisch umlaufenden Werkstückes nicht während des ganzen Werkstückumlaufs, sondern nur in einem bestimmten Umlaufbahnabschnitt erfaßt. Dieser Umlaufbahnabschnitt ist definiert durch die Überschneidung der Bewegungsbahn 34 des Werkstückes 13 mit dem Erfassungsbereich 39 zwischen den Tastern 18 des Meßkopfes 17. Dabei kann es ausreichen, den Durchmesser des Werkstückes 13 in diesem Umlaufbahnabschnitt nur ein einziges Mal zu erfassen und durch die Steueranordnung zu einem entsprechenden Durchmessersignal zu verarbeiten. Es ist natürlich im Rahmen der Erfindung auch möglich, den Durchmesser innerhalb des vorgegebenen Umlaufbahnabschnitts mehrfach zu erfassen und entsprechende Einzel- oder Durchschnittssignale des Durchmessers zu bilden. Jedenfalls genügt es für das meßgesteuerte Schleifen von exzentrisch umlaufenden Werkstükken, den Durchmesser nur einmal während des Umlaufes zu erfassen. Dies gilt insbesondere dann, wenn die Schleifscheibe nicht kontinuierlich zugestellt wird, sondern nur einmal während eines jeden Werkstückumlaufs eine Zustellung der Schleifscheibe erfolgt.

In aller Regel wird für die Durchmesser-Messung ein handelsüblicher Meßkopf mit zwei relativ zueinander beweglichen Meßtastern eingesetzt werden. Die absolute Durchmesser-Messung ist aber auch möglich, wenn ein beweglicher Taster den Werkstückdurchmesser gegen ein starres Referenzelement mißt, der zweite Taster also als Referenzelement starr am Meßkopf angeordnet ist. Diese Variante ist in der Zeichnung nicht eigens dargestellt. Sie kann realisiert werden, indem bei der Meßkopfausführung nach den Figuren 2 bis 4 der auf der Seite des Führungslineals 33 liegenden Taster 18 starr angeordnet wird oder wegfällt. Das Führungslineal 33 erfüllt dann gleichzeitig die Aufgabe eines starren Tasters oder Referenzelements für die Durchmessererfassung mit dem zweiten, beweglichen Taster.

## Patentansprüche

1. Verfahren zum Messen des Durchmessers (D) eines exzentrisch um eine Umlaufachse (36) umlaufenden Werkstücks (13), beispielsweise eines Hubzapfens (13) einer auf einer Werkzeugmaschine, insbesondere einer Schleifmaschine, rotierenden Kurbelwelle (9) während ihrer Bearbeitung, bei dem Meßtaster (18) eines Durchmessermeßkopfes (17) an die Umfangsfläche des Werkstücks (13) angelegt werden und der Durchmesser (D) des Werkstücks erfaßt wird, während der Meßkopf (17) der Bewegung des Werkstücks (13) nachgeführt wird, dadurch gekennzeichnet, daß die Meßtaster (18) des Meßkopfes (17) nur in einem vorgegebenen Umlaufbahnabschnitt an das umlaufende Werkstück (13) angelegt werden und daß der Werkstückdurchmesser (D) beim Durchlaufen dieses vorgegebenen Umlaufbahnabschnitts erfaßt wird.

2. Verfahren nach Anspruch 1, dadurch gekennzeichnet, daß der Werkstückdurchmesser (D) während eines Werkstückumlaufs nur einmal beim Durchlaufen des vorgegebenen Umlaufbahnabschnitts erfaßt wird.

3. Verfahren nach Anspruch 1 oder 2, dadurch gekennzeichnet, daß das Werkstück (13) während seines Umlaufs am Anfang des vorgegebenen Umlaufbahnabschnitts in einen zwischen den Meßtastern (18) liegenden Erfassungsbereich (39) hineinbewegt wird, daß der Durchmesser (D) des Werkstücks (13) beim Durchgang durch den Umlaufbahnabschnitt erfaßt wird und daß das Werkstück (13) am Ende des Umlaufbahnabschnitts aus dem Erfassungsbereich (39) der Taster (18) herausbewegt wird.

4. Verfahren nach einem der Ansprüche 1 bis 3, dadurch gekennzeichnet, daß der Meßkopf (17) während des Durchlaufs des Werkstücks (13) durch den vorgegebenen Umlaufbahnabschnitt um eine zur Achse (36) der Umlaufbahn (34) parallele Achse (19) geschwenkt wird und daß die Schwenkbewegung des Meßkopfs (17) in Abhängigkeit von der Bewegung des Werkstücks (13) durch den Umlaufbahnabschnitt angetrieben und gesteuert wird.

5. Verfahren nach Anspruch 4, dadurch gekennzeichnet, daß die Schwenkbewegung des Meßkopfs (17) durch das den vorgegebenen Umlaufbahnabschnitt durchlaufende Werkstück (13) selbst angetrieben und geführt wird.

6. Verfahren nach Anspruch 4 oder 5, dadurch gekennzeichnet, daß die Messung des Werkstückdurchmessers (D) etwa beim Durchgang des Werkstücks (13) durch eine die Schwenkachse (19) des Meßkopfes (17) und die Achse (36) der Umlaufbahn (34) des Werkstücks (13) verbindende Ebene (42) ausgeführt wird.

7. Vorrichtung zum Messen des Durchmessers (D) eines exzentrisch um eine Umlaufachse (36) umlaufenden Werkstücks (13), beispielsweise eines Hubzapfens (13) einer auf einer Werkzeugmaschine, insbesondere einer Schleifmaschine, rotierenden Kurbelwelle (9) während ihrer Bearbeitung mit einem Durchmessermeßkopf (17), welcher um eine zur Umlaufachse (36) parallele stationäre Achse (19) schwenkbar ist, sich zur Messung des Durchmessers (D) an die Umfangsfläche (37) des Werkstücks (13) anlegende Meßtaster (18) aufweist und während der Messung der Bewegung des Werkstückes (13) folgend angeordnet ist, dadurch gekennzeichnet, daß die Bewegungsbahn der Meßtaster (18) bei der Schwenkbewegung des Meßkopfs (17) um seine Schwenkachse (19) die Umlaufbahn (34) des Werkstücks (13) in einem vorgegebenen Umlaufbahnabschnitt schneidet,daß der Meßkopf (17) in Abhängigkeit von der Umlaufbewegung eines Werkstücks (13) im Überschneidungsbereich aus einer Eintrittsposition, in welcher die Meßtaster (18) entgegen der Umlaufrichtung wenigstens angenähert tangential zur Umlaufbahn (34) des Werkstücks (13) ausgerichtet sind, in eine Austrittsposition schwenkbar ist, in welcher die Meßtaster (18) in Umlaufrichtung wenigstens angenähert tangential zur Umlaufbahn (34) des Werkstücks (13) ausgerichtet sind,und daß die Umlaufbahn (34) des Werkstücks (13) in der Eintrittsposition des Meßkopfes (17) in einen zwischen den Meßtastern (18) des Meßkopfes (17) liegenden, das zu messende Werkstück (13) aufnehmenden Erfassungsbereich (39) hinein und in seiner Austrittsposition aus diesem heraus verläuft.

8. Vorrichtung nach Anspruch 7, dadurch gekennzeichnet, daß dem Meßkopf (17) Antriebsmittel (13,46) zugeordnet sind, welche den Meßkopf aus einer Eintrittsposition, in der die Meßtaster (18) zur Einführung des Werkstücks (13) in den Erfassungsbereich (39) wenigstens angenähert tangential zum Anfang des vorgegebenen Umlaufbahnabschnitts hin ausgerichtet sind, durch eine Meßzone, in der die Taster (18) den Durchmesser (D) des Werkstücks (13) abgreifen, in eine Austrittsposition schwenken, in der die Meßtaster (18) zum Abgeben des Werkstücks (13) aus dem Erfassungsbereich (39) wenigstens angenähert tangential zur Bewegungsbahn (34) des Werkstücks am Ende des Umlaufbahnabschnitts hin ausgerichtet sind.

9. Vorrichtung nach Anspruch 8, dadurch gekennzeichnet, daß das Antriebsmittel (46) des Meßkopfes (17) an eine Steueranordnung (44) angeschlossen ist, welche die Schwenkbewegung des Meßkopfes in Abhängigkeit von der Umlaufbewegung eines in den Erfassungsbereich (39) der Meßtaster (18) eingetretenen Werkstückes (13) durch den vorgegebenen Umlaufbahnabschnitt steuernd ausgebildet ist.

10. Vorrichtung nach Anspruch 8, dadurch gekennzeichnet, daß als Antriebsmittel für die Schwenkbewegung des Meßkopfes (17) das in den Erfassungsbereich (39) der Meßtaster (18) eingreifende, umlaufende Werkstück (13) selbst vorgesehen ist.

11. Vorrichtung nach einem der Ansprüche 7 bis 10, dadurch gekennzeichnet, daß einer der Taster (18) des Meßkopfes (17) als starres Referenzelement ausgebildet ist.

12. Vorrichtung nach einem der Ansprüche 7 bis 11, dadurch gekennzeichnet, daß der Meßkopf (17) ein in seiner Eintrittsposition an der Vorderseite des Werkstücks (13) in dessen Umlaufbahn (34) eingreifendes starres Führungslineal (33) aufweist, an welchem das Werkstück (13) während seines Durchlaufs durch den vorgegebenen Umlaufbahnabschnitt zum Schwenken des Meßkopfes (17) aus seiner Eintrittsposition in seine Austrittsposition anliegt.

13. Vorrichtung nach Anspruch 12, dadurch gekennzeichnet, daß das Führungslineal (33) gleichzeitig als Referenzelement für die Messung des Werkstückdurchmessers (D) vorgesehen ist.

14. Vorrichtung nach einem der Ansprüche 10 bis 13, dadurch gekennzeichnet, daß ein den Meßkopf (17) aus seiner Austrittsposition in seine Eintrittsposition zurückschwenkender Rückstellantrieb (22) vorgesehen ist.

## Claims

1. A process for measuring the diameter (D) of a workpiece (13) rotating eccentrically about a rotational axis (36), for example a stroke pin (13) of a crankshaft (9) which is rotating on a machine tool, in particular a grinding machine, during machining thereof, in which measuring callipers (18) of a diameter-measuring head (17) are placed against the peripheral face of the workpiece (13) and the diameter (D) of the workpiece is recorded whilst the measuring head (17) follows the movement of the workpiece (13), characterized in that the measuring callipers (18) of the measuring head (17) are placed against the rotating workpiece (13) only in a predetermined section of the rotational path, and in that the diameter (D) of the workpiece is recorded as it passes through this predetermined section of the rotational path.

2. A process according to Claim 1, characterized in that, during one rotation of the workpiece, the diameter (D) of the workpiece is recorded only once as it passes through the predetermined section of the rotational path.

3. A process according to Claim 1 or 2, characterized in that, during its rotation at the start of the predetermined section of the rotational path, the workpiece (13) is moved into a recording region (39) located between the measuring callipers (18), in that the diameter (D) of the workpiece (13) is recorded as it passes through the section of the rotational path, and in that, at the end of the section of the rotational path, the workpiece (13) is moved out of the recording region (39) of the callipers (18).

4. A process according to one of Claims 1 to 3, characterized in that, as the workpiece (13) passes through the predetermined section of the rotational path, the measuring head (17) is pivoted about an axis (19) parallel to the axis (36) of the rotational path (34), and in that the pivotal movement of the measuring head (17) is driven and controlled as a function of the movement of the workpiece (13) through the section of the rotational path.

5. A process according to Claim 4, characterized in that the pivotal movement of the measuring head (17) is driven and guided by the workpiece (13) itself passing through the predetermined section of the rotational path.

6. A process according to Claim 4 or 5, characterized in that the diameter (D) of the workpiece is measured approximately as the workpiece (13) passes through a plane (42) connecting the pivot axis (19) of the measuring head (17) and the axis (36) of the rotational path (34) of the workpiece (13).

7. A device for measuring the diameter (D) of a workpiece (13) rotating eccentrically about a rotational axis (36), for example a stroke pin (13) of a crankshaft (9) which is rotating on a machine tool, in particular a grinding machine, during machining thereof, by means of a diameter-measuring head (17) which is pivotal about a stationary axis (19) parallel to the rotational axis (36), has measuring callipers (18) placed against the peripheral face (37) of the workpiece (13) for measuring the diameter (D), and is arranged such that it follows the movement of the workpiece (13) during the measuring procedure, characterized in that, during the pivotal movement of the measuring head (17) about its pivot axis (19), the movement path of the measuring callipers (18) intersects the rotational path (34) of the workpiece (13) in a predetermined section of the rotational path, in that, as a function of the rotational movement of a workpiece (13) in the intersection region, the measuring head (17) may be pivoted out of an entry position, in which the measuring callipers (18) are aligned in opposition to the direction of rotation at least approximately tangentially with respect to the rotational path (34) of the workpiece (13), into an exit position in which the measuring callipers (18) are aligned in the direction of rotation at least approximately tangentially with respect to the rotational path (34) of the workpiece (13), and in that, in the entry position of the measuring head (17), the rotational path (34) of the workpiece (13) extends into a recording region (39), which is located between the measuring callipers (18) of the measuring head (17) and receives the workpiece (13) to be measured, and, in its exit position, extends out of this region.

8. A device according to Claim 7, characterized in that drive means (13, 46) are associated with the measuring head (17) and pivot the measuring head out of an entry position, in which the measuring callipers (18) are aligned at least approximately tangentially with respect to the start of the predetermined section of the rotational path for the purpose of introducing the workpiece (13) into the recording region (39), through a measuring zone, in which the callipers (18) determine the diameter (D) of the workpiece (13), into an exit position, in which the measuring callipers (18) are aligned at least approximately tangentially with respect to the movement path (34) of the workpiece at the end of the section of the rotational path for the purpose of moving the workpiece (13) out of the recording region (39).

9. A device according to Claim 8, characterized in that the drive means (46) of the measuring head (17) is connected to a control arrangement (44) which is constructed such that it controls the pivotal movement of the measuring head through the predetermined section of the rotational path as a function of the rotational movement of a workpiece (13) which has entered the recording region (39) of the measuring callipers (18).

10. A device according to Claim 8, characterized in that the rotating workpiece (13) coming into the recording region (39) of the measuring calipers (18) is itself provided as the drive means for the pivotal movement of the measuring head (17).

11. A device according to one of Claims 7 to 10, characterized in that one of the calipers (18) of the measuring head (17) is constructed as a fixed reference element.

12. A device according to one of Claims 7 to 11, characterized in that the measuring head (17) has a fixed guide rule (33) which, in the entry position of the measuring head on the leading edge of the workpiece (13), comes into the rotational path (34) of the latter, and against which the workpiece (13) bears whilst it passes through the predetermined section of the rotational path for the purpose of pivoting the measuring head (17) out of its entry position into its exit position.

13. A device according to Claim 12, characterized in that the guide rule (33) is at the same time provided as a reference element for measuring the diameter (D) of the workpiece.

14. A device according to one of Claims 10 to 13, characterized in that a resetting drive (22) which pivots the measuring head (17) out of its exit position back into its entry position is provided.

## Revendications

1. Procédé pour mesurer le diamètre (D) d'une pièce à usiner (13), qui circule en position excentrée, suivant un mouvement de révolution, autour d'un axe de révolution (36), par exemple d'un maneton (13) d'un vilebrequin (9) tournant sur une machine-outil, notamment une machine à rectifier, pendant son usinage, selon lequel des palpeurs de mesure (18) d'une tête de mesure de diamètre (17) sont appliqués sur la surface circonférentielle de la pièce à usiner (13) et le diamètre (D) de la pièce à usiner est détecté alors que la tête de mesure (17) est contrainte de suivre le déplacement de la pièce à usiner (13), caractérisé en ce que les palpeurs de mesure (18) de la tête de mesure (17) ne sont appliqués sur la pièce à usiner circulante (13) que dans une partie prédéterminée de la trajectoire de circulation, et en ce que le diamètre (D) de la pièce à usiner est détecté lors du parcours de cette partie prédéterminée de la trajectoire de circulation.

2. Procédé selon la revendication 1, caractérisé en ce que le diamètre (D) de la pièce à usiner n'est détecté qu'une fois pendant une révolution de la pièce à usiner, lors du parcours de la partie prédéterminée de la trajectoire de circulation.

3. Procédé selon la revendication 1 ou 2, caractérisé en ce que pendant sa circulation, la pièce à usiner (13) est amenée à entrer, au début de la partie prédéterminée de la trajectoire de circulation, dans une zone de détection (39) située entre les palpeurs de mesure (18), en ce que le diamètre (D) de la pièce à usiner (13) est détecté lors du passage dans la partie de la trajectoire de circulation et en ce que la pièce à usiner (13) est amenée à sortir de la zone de détection (39) des palpeurs (18) à la fin de la partie de la trajectoire de circulation.

4. Procédé selon l'une des revendications 1 à 3, caractérisé en ce que pendant le parcours de la partie prédéterminée de la trajectoire de circulation par la pièce à usiner (13), la tête de mesure (17) pivote autour d'un axe (19) parallèle à l'axe (36) de la trajectoire de circulation (34) et en ce que le mouvement de pivotement de la tête de mesure (17) est conduit et commandé en fonction du déplacement de la pièce à usiner (13) sur la partie de la trajectoire de circulation.

5. Procédé selon la revendication 4, caractérisé en ce que le mouvement de pivotement de la tête de mesure (17) est conduit et guidé par la pièce à usiner (13) elle-même parcourant la partie prédéterminée de la trajectoire de circulation.

6. Procédé selon la revendication 4 ou 5, caractérisé en ce que la mesure du diamètre (D) de la pièce à usiner est exécutée approximativement lors du passage de la pièce à usiner (13) par un plan (42) qui relie l'axe de pivotement (19) de la tête de mesure (17) et l'axe (36) de la trajectoire de circulation (34) de la pièce à usiner (13).

7. Dispositif pour mesurer le diamètre (D) d'une pièce à usiner (13) qui circule en position excentrée, suivant un mouvement de révolution, autour d'un axe de révolution (36), par exemple d'un maneton (13) d'un vilebrequin (9) tournant sur une machine-outil, notamment une machine à rectifier, pendant son usinage, comprenant une tête de mesure de diamètre (17), qui peut pivoter autour d'un axe fixe (19) parallèle à l'axe de révolution (36), comporte des palpeurs de mesure (18), qui s'appliquent sur la surface circonférentielle (37) de la pièce à usiner (13) pour mesurer le diamètre (D), et est disposée de manière à suivre le déplacement de la pièce à usiner (13) pendant la mesure, caractérisé en ce que la trajectoire de déplacement des palpeurs de mesure (18), lors du mouvement de pivotement de la tête de mesure (17) autour de son axe de pivotement (19), coupe la trajectoire de circulation (34) de la pièce à usiner (13) dans une partie prédéterminée de la trajectoire de circulation, en ce que la tête de mesure (17) peut être amenée par pivotement, en fonction du mouvement de circulation d'une pièce à usiner (13) dans la zone d'intersection, d'une position d'entrée, dans laquelle les palpeurs de mesure (18) sont orientés au moins approximativement tangentiellement à la trajectoire de circulation (34) de la pièce à usiner (13), en sens opposé au sens de circulation, dans une position de sortie, dans laquelle les palpeurs de mesure (18) sont orientés au moins approximativement tangentiellement à la trajectoire de circulation (34) de la pièce à usiner (13), dans le sens de circulation, et en ce que, dans la position d'entrée de la tête de mesure (17), la trajectoire de circulation (34) de la pièce à usiner (13) pénètre dans une zone de détection (39) recevant la pièce à usiner (13) qui doit être mesurée, située entre les palpeurs de mesure (18) de la tête de mesure (17), alors que dans la position de sortie de la tête de mesure, elle ressort de cette zone de détection.

8. Dispositif selon la revendication 7, caractérisé en ce qu'à la tête de mesure (17) sont associés des moyens d'entraînement (13, 46) qui font pivoter la tête de mesure depuis une position d'entrée, dans laquelle les palpeurs de mesure (18) sont orientés au moins approximativement tangentiellement au début de la partie prédéterminée de la trajectoire de circulation pour l'introduction de la pièce à usiner (13) dans la zone de détection (39), jusque dans une position de sortie, dans laquelle les palpeurs de mesure (18) sont orientés au moins approximativement tangentiellement à la trajectoire de déplacement (34) de la pièce à usiner à la fin de la partie de la trajectoire de circulation, pour laisser sortir la pièce à usiner (13) de la zone de détection (39), en passant à travers une zone de mesure dans laquelle les palpeurs (18) mesurent le diamètre (D) de la pièce à usiner (13).

9. Dispositif selon la revendication 8, caractérisé en ce que le moyen d'entraînement (46) de la tête de mesure (17) est raccordé à un dispositif de commande (44), qui est conçu de manière à commander le mouvement de pivotement de la tête de mesure en fonction du mouvement de circulation d'une pièce à usiner (13) entrant dans la zone de détection (39) des palpeurs de mesure (18), sur la partie prédéterminée de la trajectoire de circulation.

10. Dispositif selon la revendication 8, caractérisé en ce que la pièce à usiner circulante (13), qui s'engage dans la zone de détection (39) des palpeurs de mesure (18), est en elle-même prévue comme moyen d'entraînement pour le mouvement de pivotement de la tête de mesure (17).

11. Dispositif selon l'une des revendications 7 à 10, caractérisé en ce que l'un des palpeurs (18) de la tête de mesure (17) est conçu sous la forme d'un élément de référence rigide.

12. Dispositif selon l'une des revendications 7 à 11, caractérisé en ce que la tête de mesure (17) possède une règle rigide de guidage (33), qui, lorsque la tête de mesure est dans sa position d'entrée, s'engage, au niveau de la face avant de la pièce à usiner (13), dans la trajectoire de circulation (34) de cette dernière, et contre laquelle la pièce à usiner (13) s'applique lorsqu'elle parcourt la partie prédéterminée de la trajectoire de circulation pour faire pivoter la tête de mesure (17) de sa position d'entrée dans sa position de sortie.

13. Dispositif selon la revendication 12, caractérisé en ce que la règle de guidage (33) est prévue simultanément comme élément de référence pour la mesure du diamètre (D) de la pièce à usiner.

14. Dispositif selon l'une des revendications 10 à 13, caractérisé en ce qu'il est prévu un dispositif d'entraînement de rappel (22), qui ramène par pivotement la tête de mesure (17) de sa position de sortie dans sa position d'entrée.
